# EUROPEAN PATENT APPLICATION

(11) **EP 1 220 130 A2**
(43) Date of publication of application: **03.07.2002**
(21) Application number: 01309474.3
(22) Date of filing: 09.11.2001
(51) Int. Cl.: G06F 17/60

(54) **Method for enabling non-readers to communicate with electronic messages**

(30) Priority: 14.12.2000 US 736926
(71) Applicant: Readingvillage. Com, Inc., Baiting Hollow, New York 11933 (US)
(72) Inventor: Glover, Daniel M., Aliso Viejo, CA 92656 (US); Juan, Jorge V., Bronxville, New York 10708 (US); Falcon, Mary A., Baiting Hollow, New York 11933 (US)
(74) Representative: Beresford, Keith Denis Lewis

(57) **Abstract**

A computer-implemented technique for composing and electronically communicating a human-understandable message comprised of a plurality of icons is disclosed. A set of available icons is provided, each of which represents predefined information. A message area on a video display screen is sized to accommodate a plurality of the available icons in an array having a pre-arranged sequence. When it is detected that an icon selected from the set has been manually positioned into the message area, such icon is automatically re-positioned into the array in accordance with the pre-arranged sequence. The predefined information can be outputted as at least one of video and audio signals. The composed message of icons can be communicated electronically to its intended recipient, such as via the Internet.

## Description

### FIELD OF THE INVENTION

This invention is directed toward enabling non-verbal, "written" communication by prereaders and, in particular, to a technique that utilizes audio and text supported icons that enables users to create and decipher electronic mail ("email") messages regardless of whether the sender or receiver can read or write.

### BACKGROUND OF THE INVENTION

In "Beginning to Read, Thinking and Learning About Print," by Marilyn Jager Adams "reading readiness" is defined as follows:
"The 'reading ready' child enters school with a substantial base of prereading skills and a wealth of experience with and knowledge about the pleasures and functions of text and about literary language and styles. ...the likelihood that a child will succeed in the first grade depends most of all on how much she or he has learned already about reading before getting there."

One chapter in this book is entitled "Growing Successful Readers: Homes, Schools, and Communities." The author, Victoria Purcell-Gates, states:
"If we want children to learn the span of concepts about print, including directionality, eye-voice match, and so forth, we need to have children involved in reading and writing attempts of actual, connected text."

Dr. Purcell-Gates goes on to define five dimensions of "reading readiness" and discusses research studies which show that preschoolers' mastery of these five dimensions is a predictor of their later success in learning to read. She states the following:
"We hypothesize five dimensions of written language knowledge to be predictive of future school success: (1) intentionality, (2) written register knowledge, (3) alphabetic principle knowledge, (4) concepts of writing, and (5) concepts about print."

A synopsis of Purcell-Gates' definition for each of these five dimensions is provided immediately below, and further below is provided an explanation of how the present invention helps the prereader master that dimension.
(1) Intentionality: Children who understand intentionality know that print "says something." They do not have to know what it says; they only have to know that it says something. Thus, when a young child tugs on her mother's sleeve, points to a printed sign (e.g., Exit) over the door in the store and asks, "What does it say?" one may conclude that this child knows that print is a linguistically meaningful system.
2) Written Register Knowledge: Children with written register knowledge possess implicit schemas for the syntax, vocabulary, and reference characteristics of written narrative that are distinct from those they hold for oral speech. Knowledge of written storybook register is knowledge of vocabulary and syntax, and of linguistic ways to maintain meaning within text without reference to the physical world via gesture, intonation, or shared background knowledge.
3) Alphabetic Principle Knowledge: When one masters the alphabetic principle, he or she understands that encoding and decoding English words begins at the phoneme/grapheme level. That is, letters generally stand for individual "phonemes" (speech sounds). Whether one can do this accurately (conventionally map the correct letter to the sound) is beside the point at this stage. Understanding the alphabetic principle is knowing that one must do this to read and write English.
(4) Concepts of Writing: Children who understand concepts of writing conceptualize writing as a system. To measure children's understanding of concepts of writing, researchers hand them pencil and paper and asked them to "Write your name and anything else you can." Those with a strong grasp of the concept of writing, write words or pseudowords. Children who score lowest on this task draw pictures, scribbles, lines around the border of the page, etc.
(5) Concepts About Print: Children who understand concepts about print understand that marks called letters make up words, and words make up sentences that are marked by periods, question marks, and exclamation marks. They know that these marks are written, and read, beginning at the top left corner of the block of print and across horizontally to the top right corner, at which point one returns to the left end of the line underneath the line just finished, and so on.

### SUMMARY OF THE INVENTION

One object of the invention is to enable prereaders to communicate via electronic messages.

Another object of the invention is to stimulate prereaders to develop reading and writing skills.

These and other objects are attained in accordance with one aspect of the invention directed to a computer-implemented technique for composing a human-understandable message with a plurality of icons. A set of available icons is provided, each of which represents predefined information. A message area on a video display screen is sized to accommodate a plurality of the available icons in an array having a pre-arranged sequence. When it is detected that an icon selected from the set has been manually positioned into the message area, such selected icon within the message area is automatically repositioned into the array in accordance with the pre-arranged sequence.

Another aspect of the invention is directed to a computer-implemented technique for composing a human-understandable message with a plurality of icons. A set of available icons is provided, each of which represents predefined information. A message area on a video display screen is sized to accommodate a plurality of the available icons sequentially arranged in an array. When it is detected that an icon selected from a plurality of the icons which are positioned in the array is manually re-positioned to another position within the message area, the manually re-positioned icon is automatically moved from the other position to a new position in the array that is closest thereto.

A further aspect of the invention is directed to a computer-implemented technique for electronically communicating a human-understandable message composed of a plurality of icons. A set of available icons is provided, each of which represents predefined information as at least one of video and audio signals. A message having a plurality of icons is composed to an intended recipient by selecting at least one of the available icons. The composed message of icons is communicated to its intended recipient. Upon retrieval of the composed message by the intended recipient, the composed message of icons is displayed and the predefined information is outputted, as at least one of the video and the audio signals, corresponding to whichever icon from the retrieved message is selected by the intended recipient.

Embodiments implementing the above-mentioned techniques of the invention can take various forms, such as method, apparatus, article of manufacture and a signal.

### BRIEF DESCRIPTION OF THE DRAWINGS

Fig. 1 shows the display screen of a monitor as it displays a "WRITE EMAIL MESSAGE" page in accordance with the invention.
Fig. 2 shows a flow chart of the basic operations performed in accordance with the invention.
Fig. 3 shows a flow chart with details of the "ARRANGE ICONS FOR EMAIL MESSAGE" operation included in Fig. 2.
Fig. 4 shows a flow chart with details of the "ICON IS AUTOMATICALLY POSITIONED INTO THE MESSAGE WINDOW" operation included in Fig. 3.
Fig. 5 shows a flow chart with details of the "AUTOMATICALLY RE-POSITION ICONS IN THE MESSAGE WINDOW" operation included in Fig. 3.
Fig. 6 shows a flow chart of the operations performed when a recipient reads an email message prepared in accordance with the invention.

### DETAILED DESCRIPTION OF THE DRAWINGS

It is contemplated that the invention will be implemented with a computerized system that would typically include a personal computer, a keyboard and/or a mouse, a monitor, and one or more speakers. The operating system is preferably WINDOWS or Mac OS, and a browser such as Internet Explorer or Netscape Navigator is used. Some data storage capacity on a computer-readable medium is required. A computer-readable medium is any article of manufacture that contains data which can be read by a computer or a carrier wave signal carrying data that can be read by a computer. For example, code corresponding to the computer program and/or databases to enable execution of the various required computerized operations in accordance with the invention may be stored and distributed on magnetic media, such as floppy disk, flexible disk, hard disk, reel-to-reel tape, cartridge tape and cassette tape; optical media, such as CD-ROM and writable compact disk; and paper media, such as punched cards and paper tape; memory chips such as a RAM, a PROM, an EPROM, a FLASH-EPROM; or on a carrier wave signal received through a network, wireless network, or modem, including radio-frequency signals and infrared signals.

One particularly advantageous utilization of the invention is with prereaders. Consequently, details of the present invention will be provided in connection with that type of user, although it will be understood that the invention is not limited thereto.

In the preferred embodiment, the sender (this term is applied herein to anyone who composes an email message, whereas "recipient" is applied to anyone receiving and reading said message, and both are referred to as "users") accesses a website designed for this invention and logs in as a registered user. It is understood that the website can offer the user various choices, including composing (i.e. writing) messages, reading messages, other email-related functions as well as even unrelated functions. For example, an email-related function might be storing a list of names and addresses of recipients to whom email can be sent. An unrelated function can be the playing of some electronic game. The assistance of an adult is likely needed to set up an address list for example. However, after the initial set-up, the prereader should be able to perform the message composition, reading and communication functions as much as possible on her own.

The invention will now be described with the understanding that the user has selected the "WRITE EMAIL MESSAGE" page on the website. The required data to display this page and affect the various operations associated therewith can be pre-stored locally by distributed software, or it can all be downloaded from the website upon log-in and/or when this page is selected, or it can be downloaded as needed when any particular function is selected. The second option is preferred.

The website is designed specifically for the invention in terms of having available the various pages for downloading to the user, and databases that are also downloadable and which are described below. This is a conventional and widely used approach for operating websites and, therefore, details thereof are not deemed necessary.

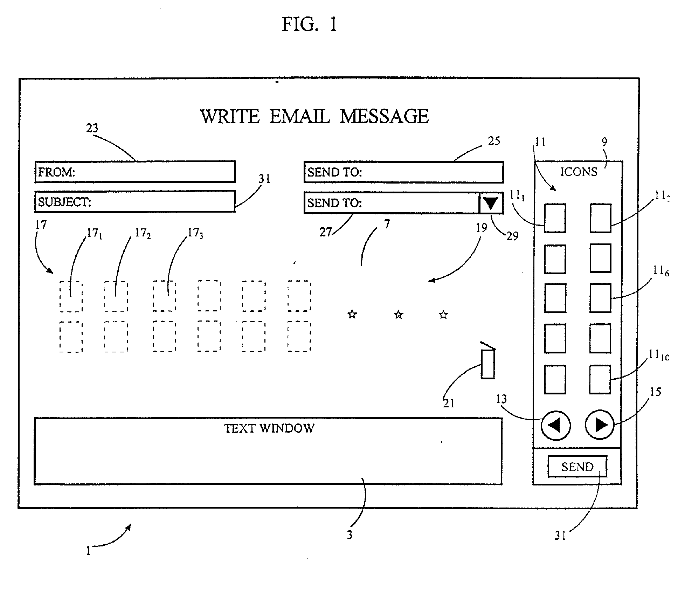

As shown in Fig. 1, a monitor 1 displays a printed text window, represented by box 3, a message window, represented by box 7, and an available icons window, represented by box 9.

Window 9 includes a set of icons 11 any one of which can be selected by the user with a mouse. In the preferred embodiment, each icon represents a word. The selected icon can be clicked and dragged into message window 7 if the sender wants it to be part of the message being composed. Window 9 also includes buttons 13 and 15 which can flip backward or forward through several displays of more icons than can fit at one time within window 9.

Some of the icons 11 can be a printed word in a colored box. Short functional words, such as articles (the, a, an), pronouns (I, you), and forms of the verb *"to be"* (is, are, am) appear in this format. However, most of the icons are pictographs of the words they represent, e.g., a laughing "happy face" for the word "*funny*"; a "happy face" with a raised hand for the word *"Hi";* a stick figure with a dress for the word *"Mommy";* and two stick figures holding hands for the word *"friend."*

All of the icons are supported by rollover audio. Thus, when the cursor rolls over the image (the cursor need not rest on the icon), the corresponding word associated therewith is spoken. Besides audio rollover, the pictograph icons preferably have the additional feature that the corresponding printed word becomes visible below the icon for as long as the cursor stays over the icon. This is helpful, particularly to the early reader, to reinforce word recognition.

As one of the available icons in window 9 is selected by resting the cursor on it, it can be dragged with the mouse by conventional software features available under Windows, for example. The selected icon is dragged into message window 7 and suitably positioned to form part of the message being composed in the manner described in detail below. The message has a designated number of specified icon locations, or spaces, 17. These locations are arranged in a grid, and each space has a predetermined size and shape. When all of the desired icons 11 have been positioned into icon locations 17, these icons constitute a composed message 19.

Message window 7 also includes a trash bin 21. Individual icons already positioned within message window 7 can be dragged into trash bin 21 and, as is well known, this serves to clear that icon from the message window. It is also possible to clear the entire message 19 in one operation, such as for example by double clicking on trash bin 21.

Text window 3 is provided for the purpose of enabling the sender to type in a message composed from alphanumeric characters. Of course, this must be done by someone having skills more advanced than those of a prereader. The concept behind text window 3 is to enable a user with some reading capability to take advantage of it by supplementing the icon-based message 19 with a text-based message (e.g. to type in their own name, which most prereaders can and do enjoy doing). Also, text window 3 provides the capability for a parent of a child prereader to add any comments to the recipient (e.g. grandma) that may be desired in addition to the prereader's icon-based message 19.

The name of the sender of the message appears automatically in window 23. Window 27 and drop-down menu button 29 can be used to specify the recipient. Window 31 makes it possible to specify a subject for the message. Windows 27 and 31 can be completely text-based which, of course, is conventional. Alternatively, these can also be icon-based, and the drop-down menu enabled by button 29 can be icons that have been designated to represent certain people. Thus, for specifying the mother or father of the sender as the recipient in window 27, the mother or father stick figure can be chosen in the drop-down menu. One or the other can simply be clicked on from the drop-down menu displayed by actuation of button 29. It is also necessary to associate such recipient icons with an email address. The intervention of a more sophisticated user is required for this purpose during set-up. However, once the list of recipients is set up , even a prereader can compose the entire WRITE EMAIL MESSAGE page by selecting from recipient icons to complete the entry of information into window 27. Finally, once all of the information has been entered so that the message is complete, both the icon-based message in window 7 and the text-based message in window 3, and also including including the recipient, SEND button 31 is clicked to actually transmit the message electronically.

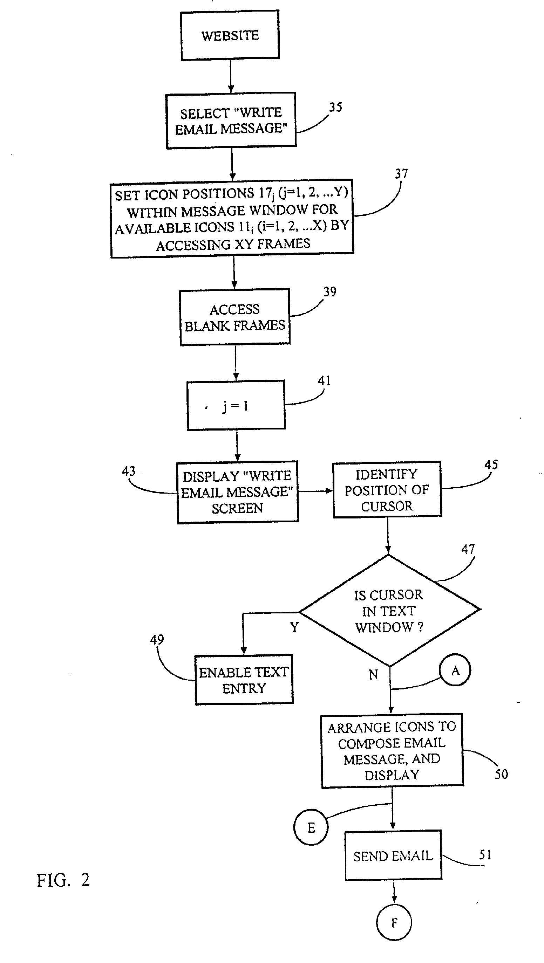

Turning now to Fig. 2, the input to step 35 occurs after the website has been accessed and log-in has been completed so that the various user options mentioned above are displayed. The user then selects the "WRITE EMAIL MESSAGE" per step 35. This actuates the following operation of the invention which utilizes the well known computer program Flash available from Macromedia. Flash is used to prepare and store a total of XY frames which are ultimately downloaded to the user's computer, where "X" is the number of possible icon positions within message window 7, and "Y" is the number of available icons 11 in window 9. Say, for example, that the number of possible icon positions X is 20, and the number of available icons is 10. Thus, the number XY of stored frames equals 200.

Let us take as an example icon 11₁ in window 9. That icon can be selected for any one of the 20 possible icon positions within window 7. Thus, one of the frames will have icon 11₁ in icon position 17₁. All of the other possible icon positions 17 will be blank in that frame. This creates frame 11₁/17₁. Another frame will then have icon 11₁ in icon position 17₂. Again, all of the other possible icon positions 17 will be blank. Such frame is identifiable as 11₁/17₂. This is repeated by preparing one such frame for each one of the 20 possible icon positions 17. Thus, when available icon 11₁ is dragged to possible icon position 17₃, the invention retrieves the particular frame 11₁/17₃. A similar set of 20 frames is prepared for available icon 11₂, and so on for all of the available icons 11.

Step 37 shows the preparation and storage of the just-described frames for each available icon 11ᵢ (where i = 1, 2,...X) and each possible icon position 17ⱼ (wherej = 1, 2,...Y). Step 39 stores a suitable number of blank frames representing those available icon positions 17 in which the display of a blank frame is to be enabled. Since it is not likely that a blank will appear in the first icon position 17₁, nor in the last one, presumably such a suitable number of blank frames will constitute a total of 18 for the present example in which Y = 20. The blank space can be designated by an icon in window 9 or by some other operation, such as touching the space bar on a keyboard.

In step 41, the initial icon position j is set to 1. Step 43 then displays the "WRITE EMAIL MESSAGE" screen, or page. More specifically, the displayed image shows blank boxes 3, 7, 27 and 31, but includes a display of available icons 11 within window 9. It is possible either at this point or at a later point for the sender to enter information into windows 27 and 31. However, no additional discussion of these operations is deemed necessary.

The sender then positions the cursor somewhere within the displayed image. The position of the cursor is detected per step 45, and step 47 determines whether that cursor position is within text window 3. If it is, then step 49 enables entry of text by the sender with the keyboard. If the cursor is not within the text window 3, then various operations are carried out that involve the selection of icons 11 to compose, or write, an email message, as generally represented by box 50 and described in detail below in connection with the other drawings. Finally, once writing of the email message has been completed, SEND button 31 is clicked to send the email electronically, per step 51.

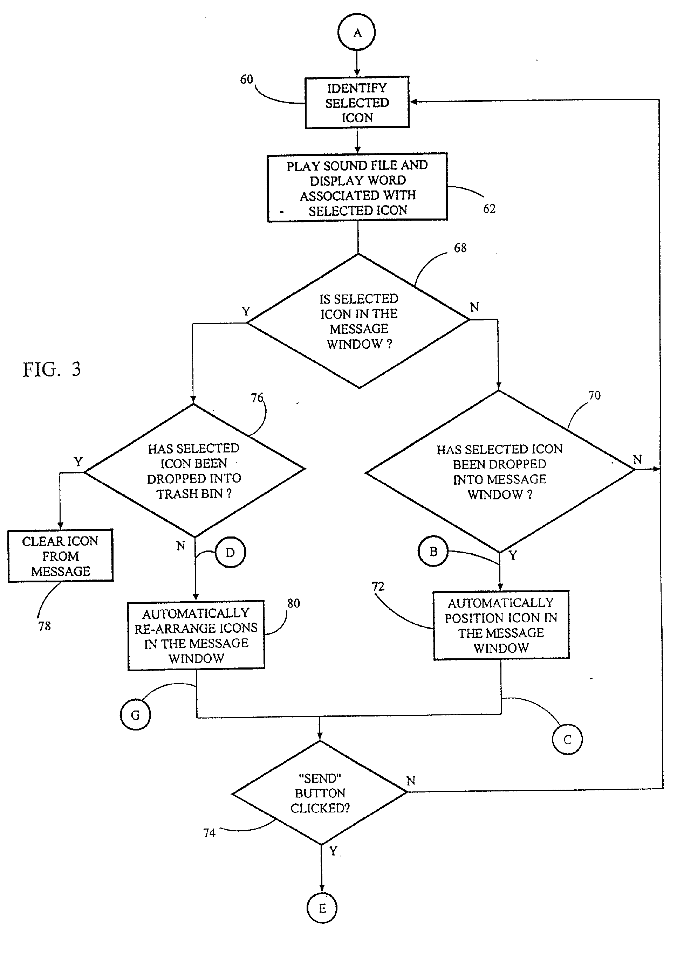

The details of box 50, namely how icons are arranged in message window 7, will be described with regard to Figs. 3, 4, and 5. The input to Fig. 3 corresponds to the output from decision box 47 in Fig. 2. It is noted that in step 45, the position of the cursor has been identified. Thus, from box 47 the system knows that the cursor is within window 9. If in that position the cursor rests on one of icons 11, step 60 identifies which of icons 11 has been.selected by the sender. Step 60 detects that an icon has been selected when the cursor rests on it or even if the cursor has briefly passed, or rolled, over it. This roll over feature is a part of the above-mentioned Flash program. Step 62 provides an audio output by playing the sound file corresponding to the selected icon through a set of speakers. This sound file is retrieved from a stored database of such files respectively corresponding to the available icons in window 9. Step 62 also displays an image file of the word associated with that icon. The image file is retrieved from a stored database of such files. Thus, under (or near) an icon which is a smiling face of a female, the image file might display the text "MOM." The flow then proceeds from step 62 to decision box 68.

The invention determines whether the selected icon is within message window 7, per box 68. If it is not within message window 7, the icon must be one of the available icons within window 9. If so, decision box 70 determines whether the selected icon has been dragged into the message window. This determination is made with respect to the area within the entire periphery of window 7. In other words, it is necessary merely to drag icon 11₁ only to the point within window 7 which is closest thereto. It is not necessary to drag icon 11₁ all the way to a specific icon position, such as 17₃, within the message window. This is a valuable feature of the present invention which recognizes that the user may have a lower than normal level of manual dexterity and, therefore, requires only minimal manipulation of the mouse to simply drag a selected icon and drop it anywhere within the message window 7. The invention will then automatically "snap" that dropped icon into the next available position within the message being composed. Aside from the user-friendliness aspect, this feature has the additional "reading readiness" advantage of demonstrating to the prereader the proper sequencing of "words" within a message as it is being composed in terms of the left-to-right sequencing in a line, and the rightmost icon in line 1 being succeeded by the left-most icon in line 2.

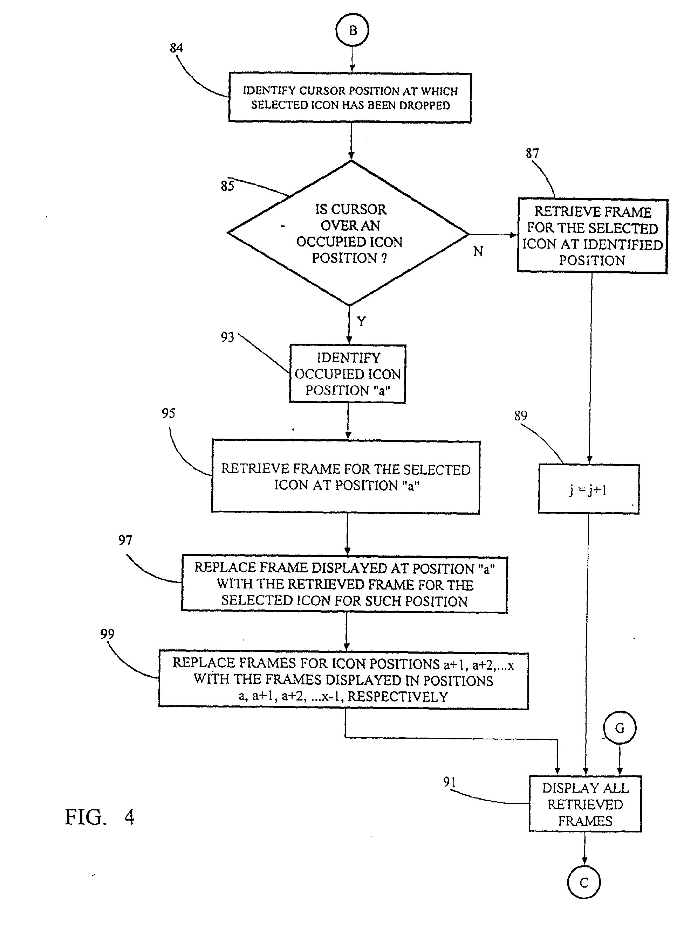

A general representation of this icon-positioning function is set forth in Fig. 3 as box 72, the details of which will be described below in connection with Fig. 4. If SEND button 31 has been clicked, as determined by step 74, then the email message is sent pursuant to step 51 in Fig. 2. However, if SEND button 31 has not been clicked, then the flow returns to box 60 and continues cycling to detect when the cursor is repositioned to select a new icon in window 9.

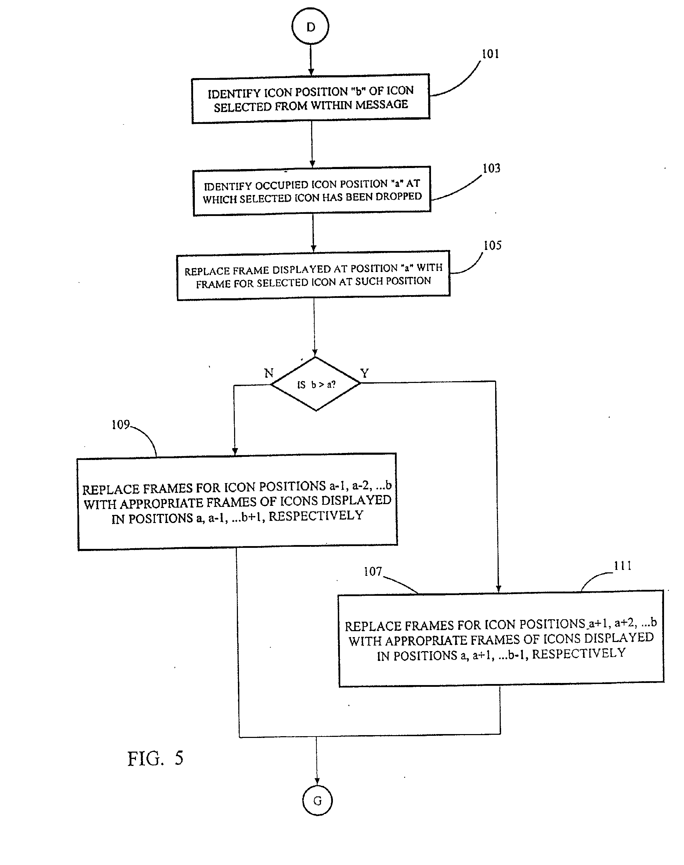

If decision box 68 produces a positive result, namely, that the selected icon is within message window 7, then decision box 76 determines whether that selected icon has been dragged to trash bin 21. If so, then the selected icon is cleared from the message, as per step 78. Otherwise, the sequence of icons already positioned within message window 7 is rearranged in accordance with the user's intention, as per box 80 which generally represents this operation. Details of the steps represented by box 80 are shown in Fig. 5 and explained below. When the steps represented by box 80 have been completed, the output thereof leads to the above-mentioned decision box 74, and so on.

As indicated above, Fig. 4 is an expansion of the operation generally represented by box 72 in Fig. 3. The input to the steps of Fig. 4 is the output of decision box 70 in Fig. 3. From the output of decision box 70 it is known that the selected icon has been dropped into the message window. The position at which the selected icon has been dropped is determined by step 84. Decision box 85 determines whether this position at which the selected icon has been dropped is a position that is already occupied by an icon. More specifically, if icon positions 17₁ to 17₅ are occupied by icons previously dragged into the message window, then step 85 determines that the dropping of the selected icon at, for example, icon position 17₃ occurs over an occupied position. If the result from box 85 is negative, that means that this position is over an empty area of message window 7. However, the selected icon belongs in the next available icon position in the message being composed. Let us say that the process of writing the message has just begun, and per step 41, the next position within the message being composed is determined as j = 1. Thus, step 87 in Fig. 4 will retrieve the frame for the selected icon at that icon position within message window 7. Thus, if the selected icon is 11₆, then the retrieved frame will be 11₆/17₁. That being done, step 89 then changes the value of j to the next one, namely 2. Step 91 then displays that frame 11₆/17₁. The output of step 91 flows into decision box 74 (Fig. 3), and so on, as described above.

When the next sequence of steps 60, 62, 64, 68, 70, 84 and 85 is followed, which leads once again to step 87 in the flow, this time with j = 2, the invention will retrieve the frame for that selected icon, say 11₂, for icon position 17₂. Thus, the retrieved frame will be 11₂/17₂. Step 89 then changes the value of j to 3 and step 91 will display both the frame 11₆/17₁ and the frame 11₂/17₂. Thus, both icons 11₆ and 11₂ will appear in their proper positions 17₁ and 17₂ within message window 7. Moreover, with the use of such frames, neither icon had to have been accurately positioned at its ultimate icon position. Instead, the selected icon can be dropped at any position within the message window 7, and then it is "snapped" into its proper position by retrieving the appropriate frame per step 87 which is then displayed per step 91.

If decision box 85 produces a positive result, this means that the selected icon has been dropped at one of the icon positions 17 in the message window which is already occupied by a previously selected icon. Step 93 identifies that occupied position which is designated as "a". More specifically, if the identified position is 17₃, then a = 17₃. The use of the letter "a" is merely for the purpose of simplicity in the description which follows.

Step 95 is similar to above-described step 87. More specifically, the appropriate frame is retrieved for the selected icon at position "a". Thus, with "a" being 17₃ in our present example, and presuming that the selected icon is 11₁₀, the retrieved frame will be 11₁₀/17₃. Step 97 then replaces the frame which had been associated with icon position 17₃ with the newly retrieved frame associated with the selected icon for that position. Of course, this necessitates a re-shuffling of the subsequent icons that have previously been placed in the message window which have to now be displaced by one position. This is accomplished by step 99 which puts into new icon positions a+1, a+2,...x the respective icons presently in icon positions a, a+1,...x-1. In our example, where a = 17₃, this means that icon position 17₄ (i.e. a+1) will display the icon that was previously in icon position 17₃, and so on. The manner in which this is achieved is an extension of what has been described above in terms of retrieving and displaying frames. Step 99 leads to above-described displaying step 91.

It will be recalled that step 68 in Fig. 3 determines whether the icon selected by the sender was one already within message window 7. The description provided in connection with Fig. 4 was based on a negative result, namely, that the selected icon was from icon window 9 and was then dropped at either an occupied position or an empty position within message window 7. The description of the invention will now proceed to an explanation of what happens when box 68 produces a positive result. In particular, the flow will now be picked up at the output of decision box 76 in Fig. 3. At this point in the flow, it has been determined that the selected icon is one that is already within message window 7. Accordingly, step 101 in Fig. 5 identifies the position of this icon within the message window. Let us presume that the selected icon is in position 17₂. For the sake of simplicity in the ensuing explanation, this icon position is assigned the letter "b". Thus b = 17₂ in our present example. Step 103 then identifies the position at which the selected icon from position 17₂ has been dropped. This "dropped at" position will once again be identified by "a", as was done in connection with the description of Fig. 4. Thus, at this point the system knows that the sender wants to move the icon currently in position 17₂ to position 17₃. This is achieved by step 105 which replaces the frame that displays an icon at position "a" (i.e. 17₃) with a frame that displays the selected icon (previously displayed at position "b", i.e. 17₂) at position "a". It is believed that based on the description provided above, how this is implemented should be clear without the need to once again repeat the details involved.

With a selected icon positioned within the message being moved from one icon position to another (e.g. from 17₂ to 17₃), a reshuffling of other icons positioned in the message is required. Thus, decision box 107 determines whether the icon is being moved forward in the message, or backward. Specifically, step 107 determines whether "b" is greater than "a". More specifically, in our example, it checks whether icon position 17₂ is after position 17₃. In this example, the answer will be negative because the position of the selected icon is before the position to which it is being shifted. Thus, step 109 carries out the shifting of whatever other icons need to be shifted within the composed message. In our example, the icon is shifted from position 17₂ to 17₃. Unless the appropriate icons are shifted into a new position, icon position 17₂ will remain empty. In order to maintain the desired, newly revised sequence of icons, the icon that was previously in position 17₃ must be shifted backward into the now empty position 17₂. Stated in more general terms, the frames for icon positions a-1, a-2, ... b are replaced with frames displaced in positions a, a-1, ... b+1, respectively. The mechanism for replacing the frames by retrieving a suitable frame for the respective icon at its corresponding position has been described above and, therefore, it is deemed that a repeat of those details is not necessary.

Step 111 is carried out when the selected icon is being shifted backward within the composed message, i.e. b is greater than a. In such case, the frames for icon positions a+1, a+2, ... b are replaced by frames displayed in positions a, a+1, ... b-1, respectively.

As is evident from the above, after the icons are dropped into the message window and are "snapped" into position, the user can rearrange their order by clicking and dragging them to other locations within the message window. However, no matter how sloppily they are dropped, as long as they are dropped within the boundaries of the message window, the icons will always snap into the nearest row, thus demonstrating to the prereader the proper formatting of printed text.

Returning to Fig. 2, when the composed email message is sent by clicking SEND button 31, conventional, well-known technology for the transmission of email messages can be used to perform that function. It is contemplated that the intended recipients will be of two types. The first type will be called a "registered recipient" and the second type will be called a "non-registered recipient". A registered recipient is recognizable by the website due to completion of a prior registration process, and the website will therefore make available to such recipient features that have been specifically designed for writing, communicating and receiving e-mail messages in accordance with invention.

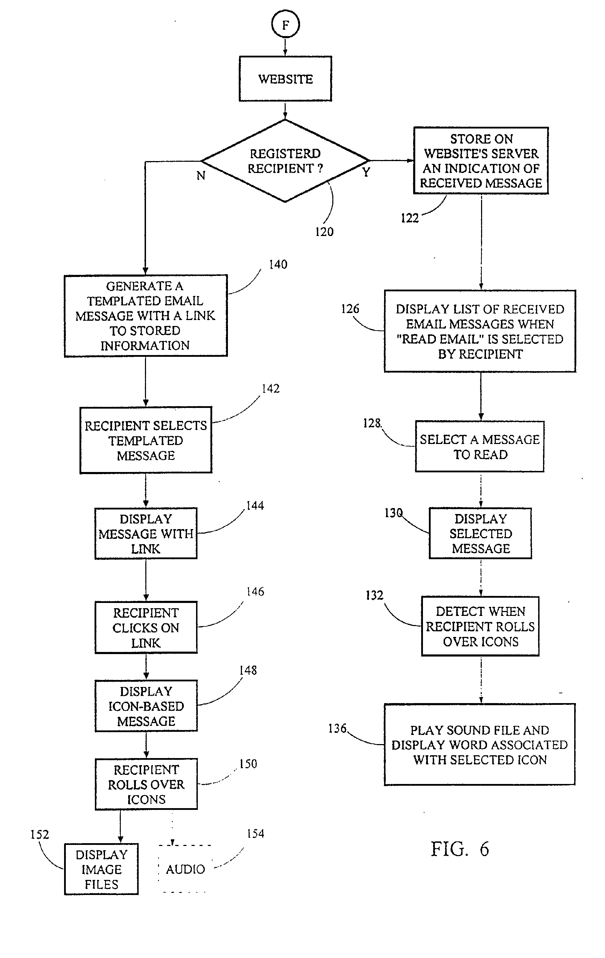

Turning now to Fig. 6, decision box 120 determines whether the intended recipient is a registered recipient. If it is, then step 122 stores an indication notifying that recipient of a received message. This indication is stored on the server of the particular website with which the recipient is registered and which implements the present invention. The recipient can select the "READ EMAIL" per step 124, and then step 126 displays a list of email messages received by that recipient, and additionally identifying the sender and providing other information in a conventional manner. The recipient selects a message to read, per step 128, and this message is displayed per step 130.

When the recipient rolls over any icon in the received message per step 132, the sound file of that icon is played and an image file of the associated word is displayed, per step 136, as the website provides access to the sound and image databases (discussed below). Step 136 is identical to step 62 of Fig. 3. The various functions carried out in connection with the just described steps are enabled by the website downloading to the recipient's computer, or providing access to, the same information described above in connection with writing the e-mail message by the sender.

If it is determined by step 120 that the intended recipient is not a registered recipient, then step 140 generates a templated e-mail message when the SEND button is clicked, which includes a link to the stored information corresponding to the composed message. Such templated e-mail messages with an embedded hypertext link to the URL address of the stored information are currently in wide use and, thus, are well known. Consequently, no additional details are deemed necessary. In step 142 the recipient selects the particular message from among other messages that he may have received, and the message with the embedded link is displayed per step 144. If the recipient clicks on that link, per step 146, then the icon-based message is displayed per step 148. These operations can be carried out in conventional fashion by a common browser, such as Internet Explorer. When the recipient rolls over the icons in the displayed message, step 152 will display the image file of the associated text, as does step 136 described above. Such a function is commonly supported by a browser. However, the audio corresponding to that icon cannot be played unless the recipient's computer has the appropriate software to handle sound files, namely the "Flash" software discussed above. If the recipient's computer does have this program as a plug-in, then step 154 will play the appropriate sound file of the selected icon; otherwise, no audio will be available. This is why box 154 is shown in broken lines.

In the discussion provided above, reference has been made to the need for information and data. These are stored in databases that are addressable by the software used to implement the invention. Such databases store the sound files for the available icons 11, the XY frames and the blank frames created by FLASH that are used to compose the email message, the image files for the text representation of the icons, a list of senders, and an address list of recipients.

As explained above, the following five dimensions of written language knowledge are said to be predictive of future school success: (1) intentionality, (2) written register knowledge, (3) alphabetic principle knowledge, (4) concepts of writing, and (5) concepts about print. These are all addressed by the present invention. Each of these five dimensions is discussed below to show how the present invention helps the prereader master that dimension.

### (1) Intentionality

By activating, or selecting, each icon, listening to the audio word, and watching the printed word appear, the child gets the clear idea that this symbol "says something" and that, taken together, the symbols express a combined "something."

### 2) Written Register Knowledge

By selecting icons, arranging and rearranging them, then listening to the results for sense, prereaders learn basic rules of writing. They learn, for example, how certain kinds of words (which they will later learn are called 'verbs') give action to a sentence while other kinds of words (which they will later learn are called 'adjectives') describe things. When children use the system to decipher received email messages, it enables them to have the experience of "reading" regardless of their ability to read on their own.

### 3) Alphabetic Principle Knowledge

The invention can address this aspect of reading readiness by using icons that represent single letters and phonemes rather than entire words. With single letter and phoneme icons, children can create words. Also, by using an icon representing a blank space, children can drag and drop it between letters or phonemes to indicate the end of one word and the beginning of the next word.

### (4) Concepts of Writing

The invention is designed to support the prereader's emerging concepts of writing as a system. By manipulating icons, prereaders get the idea that they are writing something as opposed to drawing something. Because the invention helps them understand the concept of writing as a symbolic system of communication, they will be prepared for later exposure to symbolic writing systems other than Arabic (e.g., Chinese, Hebrew).

### (5) Concepts About Print

Through trial and error discovery learning, and by receiving email messages from adults or older children that make sense only when tracked properly, i.e., read from the beginning at the top left corner and across horizontally to the top right corner, then from the left end of the line underneath to the right end, and so on, children learn the tracking conventions of written English.

Although a particular embodiment of the present invention has been described in detail herein, various modifications thereof will be readily apparent to anyone with ordinary skill in the art. For example, punctuation icons can be provided. Punctuation icons trigger different audio files of the word icons that appear before them. For example, in the declarative sentence "You do not like me." the audio for the word "me" is a straightforward declarative pronunciation of the word, but if the child adds the question mark icon after "me" causing the sentence to look like this: "You do not like me?" the system brings up a different audio recording of the word "me" which is spoken with the rising pitch that, in the English language, indicates a question. "You do not like me!" would bring up the declarative audio of "me" but it would be played more loudly for emphasis. Although the icons have been described as each representing a word, they could each represent a phrase. Also, making both the icon and its associated word always visible would be even more effective to reinforce word recognition than the reliance on rollover-triggered word display. This modification would merely involve redesigning the grid of the message window to accommodate the larger icon/word combinations. In addition, it is possible to have separate email areas for prereaders (4 - 6 year olds) and early readers (6 - 8 year olds). For the early readers, the approach of using icons with hidden-until-rolled-over words will be applied in their email area, whereas for prereaders, the approach of using icons with always visible text will be applied in their email area (i.e. the word will simply be part of the icon image). These and other such modifications of the present invention are all intended to fall within the scope of the present invention as defined by the following claims.

## Claims

1. A computer-implemented method for composing a human-understandable message with a plurality of icons, comprising:
providing a set of available icons each of which represents predefined information;
providing a message area on a video display screen, said message area being sized to accommodate a plurality of said available icons in an array having a pre-arranged sequence;
detecting when an icon selected from said set has been manually positioned into said message area; and
automatically re-positioning said selected icon within the message area into said array in accordance with said pre-arranged sequence.

2. The method of claim 1, wherein the array includes a linear sequence in at least one row.

3. The method of claim 2, wherein the linear sequence in the at least one row is from left to right.

4. The method of claim 1, wherein the predefined information represented by an icon selected from said set of available icons is displayed as text when said icon is selected.

5. The method of claim 1, wherein the predefined information represented by an icon selected from said set of available icons is sounded as audio when said icon is selected.

6. The method of claim 1, wherein an icon is selected with a cursor.

7. The method of claim 1, wherein an icon selected from said set is manually positioned into the message area by a drag-and-drop operation.

8. The method of claim 7, wherein said dropped icon in the message area is detected when it is anywhere within said message area to trigger said automatic re-positioning.

9. The method of claim 1, wherein said selected icon manually positioned into the message area is detected when it is anywhere within said message area to trigger said automatic re-positioning.

10. A computer-implemented method for composing a human-understandable message with a plurality of icons, comprising:
providing a set of available icons each of which represents predefined information;
providing a message area on a video display screen, said message area being sized to accommodate a plurality of said available icons sequentially arranged in an array;
detecting when an icon selected from a plurality of said icons positioned in said array is manually re-positioned to another, non-array position within said message area; and
automatically moving said manually re-positioned icon from said other position to a new position in said array that is closest thereto.

11. The method according to claim 10, wherein said automatically-moved icon replaces an icon in said array when the new position is already occupied by an icon.

12. The method according to claim, 11, wherein icons in said array are automatically re-positioned to maintain the sequence thereof within said array when said automatically-moved icon replaces the icon in said array that previously occupied said new position.

13. The method according to claim 11, wherein said replaced icon is included among the automatically re-positioned icons.

14. A computer-implemented method for electronically communicating a human-understandable message composed of a plurality of icons, comprising:
providing a set of available icons each of which represents predefined information as at least one of video and audio signals;
composing a message having a plurality of icons to an intended recipient by selecting at least one of said available icons;
communicating said composed message of icons to its intended recipient; and
upon retrieval of said composed message by the intended recipient, displaying the composed message of icons and outputting the predefined information, as at least one of said video and said audio signals, corresponding to whichever icon from said retrieved message is selected by the intended recipient.

15. The method according to claim 14, wherein said predefined information is outputted, as at least one of video and audio signals, in response to selection of one of said available icons in said set.

16. The method according to claim 14, wherein an icon is selected with a cursor.

17. The method according to claim 14, wherein communication of the composed message is done via the Internet.

18. The method according to claim 14, wherein composing of the composed message is done via the Internet.

19. The method according to claim 14, wherein retrieval of the composed message is done via the Internet.

20. The method according to claim 14, wherein said composed message is stored on a server for a website.

21. The method of claim 14, wherein the predefined information represented by an icon selected from said set of available icons is displayed as text when said icon is selected.

22. The method of claim 14, wherein the predefined information represented by an icon selected from said set of available icons is sounded as audio when said icon is selected.

23. An article of manufacture for use in a computer system for composing a human-understandable message with a plurality of icons, and having a computer readable code means for:
providing a set of available icons each of which represents predefined information;
providing a message area on a video display screen, said message area being sized to accommodate a plurality of said available icons in an array having a pre-arranged sequence;
detecting when an icon selected from said set has been manually positioned into said message area; and
automatically re-positioning said selected icon within the message area into said array in accordance with said pre-arranged sequence.

24. A computer data signal embodied in a carrier wave, comprising:
a first code segment for providing a set of available icons each of which represents predefined information;
a second code segment for providing a message area on a video display screen, said message area being sized to accommodate a plurality of said available icons in an array having a pre-arranged sequence;
a third code segment for detecting when an icon selected from said set has been manually positioned into said message area; and
a fourth code segment for automatically re-positioning said selected icon within the message area into said array in accordance with said pre-arranged sequence.

25. Apparatus for composing a human-understandable message with a plurality of icons, comprising:
means for providing a set of available icons each of which represents predefined information;
means for providing a message area on a video display screen, said message area being sized to accommodate a plurality of said available icons in an array having a pre-arranged sequence;
means for detecting when an icon selected from said set has been manually positioned into said message area; and
means for automatically re-positioning said selected icon within the message area into said array in accordance with said pre-arranged sequence.

26. An article of manufacture for use in a computer system for composing a human-understandable message with a plurality of icons, and having a computer readable code means for:
providing a set of available icons each of which represents predefined information;
providing a message area on a video display screen, said message area being sized to accommodate a plurality of said available icons sequentially arranged in an array;
detecting when an icon selected from a plurality of said icons positioned in said array is manually re-positioned to another, non-array position within said message area; and
automatically moving said manually re-positioned icon from said other position to a new position in said array that is closest thereto.

27. A computer data signal embodied in a carrier wave, comprising:
a first code segment for providing a set of available icons each of which represents predefined information;
a second code segment for providing a message area on a video display screen, said message area being sized to accommodate a plurality of said available icons sequentially arranged in an array;
a third code segment for detecting when an icon selected from a plurality of said icons positioned in said array is manually re-positioned to another, non-array position within said message area; and
a fourth code segment for automatically moving said manually re-positioned icon from said other position to a new position in said array that is closest thereto.

28. Apparatus for composing a human-understandable message with a plurality of icons, comprising:
means for providing a set of available icons each of which represents predefined information;
means for providing a message area on a video display screen, said message area being sized to accommodate a plurality of said available icons in an array;
means for detecting when an icon selected from a plurality of said icons positioned in said array is manually re-positioned to another, non-array position within said message area; and
means for automatically moving said manually re-positioned icon from said other position to a new position in said array that is closest thereto.

29. An article of manufacture for use in a computer system for electronically communicating a human-understandable message composed of a plurality of icons, and having a computer readable code means for:
providing a set of available icons each of which represents predefined information as at least one of video and audio signals;
composing a message having a plurality of icons to an intended recipient by selecting at least one of said available icons;
communicating said composed message of icons to its intended recipient; and
upon retrieval of said composed message by the intended recipient, displaying the composed message of icons and outputting the predefined information, as at least one of said video and said audio signals, corresponding to whichever icon from said retrieved message is selected by the intended recipient.

30. A computer data signal embodied in a carrier wave, comprising:
a first code segment providing a set of available icons each of which represents predefined information as at least one of video and audio signals;
a second code segment composing a message having a plurality of icons to an intended recipient by selecting at least one of said available icons;
a third code segment communicating said composed message of icons to its intended recipient; and
a fourth code segment upon retrieval of said composed message by the intended recipient, displaying the composed message of icons and outputting the predefined information, as at least one of said video and said audio signals, corresponding to whichever icon from said retrieved message is selected by the intended recipient.

31. Apparatus for electronically communicating a human-understandable message composed of a plurality of icons, comprising:
means for providing a set of available icons each of which represents predefined information as at least one of video and audio signals;
means for composing a message having a plurality of icons to an intended recipient by selecting at least one of said available icons;
means for communicating said composed message of icons to its intended recipient; and
means for upon retrieval of said composed message by the intended recipient, displaying the composed message of icons and outputting the predefined information, as at least one of said video and said audio signals, corresponding to whichever icon from said retrieved message is selected by the intended recipient.
